# EUROPÄISCHE PATENTANMELDUNG

(11) **EP 2 251 073 A1**
(43) Veröffentlichungstag der Anmeldung: **17.11.2010**
(21) Anmeldenummer: 09006178.9
(22) Anmeldetag: 06.05.2009
(51) Int. Cl.: B01D 29/05, B01D 29/84, B01D 29/76

(54) **Filtertrockner und Verfahren zum Betrieb des Filtertrockners**

(71) Anmelder: FIMA Maschinenbau GmbH, 74423 Obersontheim (DE)
(72) Erfinder: Schmid, Joachim, 74599 Wallhausen (DE)
(74) Vertreter: Hössle Patentanwälte Partnerschaft

(57) **Zusammenfassung**

Filtertrockner (10), mit einer Suspensionskammer (12), die ein produkteintragseitiges Ende (12a) und ein produktaustragseitiges Ende (12b) aufweist, wobei im Bereich des produkteintragseitigen Endes (12a) eine Öffnung für den Produkteintrag einer Suspension vorgesehen ist, mit einem an dem produktaustragseitigen Ende (12b) ausgebildeten Produktraum (40), in dem der Produktkuchen aus der Suspension gebildet wird, und mit einem an den Produktraum (40) angrenzenden und mit diesem über ein Filterelement (46) in Wirkverbindung stehenden Filtratraum (52), der vakuumbeaufschlagbar ist. Der Filtratraum (52) weist einen im wesentlichen runden Querschnitt auf, und es ist mindestens eine in den Filtratraum (52) ragende Schussdüse (62) vorgesehen. Die mindestens eine Schussdüse (62) kann seitlich durch eine Wandung des Filtratraums (52) und/oder tangential in den Filtratraum (52) ragen. Verfahren zum Betrieb eines Filtertrockners (10), wobei zur Lockerung des Produktkuchens Prozessgas in den Filtratraum (52) eingeschossen wird, um in dem Filtratraum (52) einen Prozessgaspuls zu erzeugen, der in den Produktraum (40) entweicht und den Produktkuchen durchdringt.

## Beschreibung

Die vorliegende Erfindung betrifft einen Filtertrockner und ein Verfahren zum Betrieb eines Filtertrockners.

Filtertrockner sind in der Technik allgemein bekannt. Sie werden sowohl industriell, z.B. bei chemischen Produktionsverfahren, als auch - in kleinerem Maßstab - in Laborumgebungen eingesetzt. Ein stationärer Filtertrockner zum Entfeuchten und Trocknen von Feststoff-Flüssigkeitsgemischen (Suspensionen) unter Vakuum-Erzeugung ist z.B. aus der WO 2008/031401 A2 bekannt.

Demgegenüber werden erfindungsgemäß ein Filtertrockner mit den Merkmalen des Anspruchs 1 sowie ein Verfahren zum Betrieb eines Filtertrockners gemäß Anspruch 13 vorgeschlagen.

Der Filtertrockner der Erfindung umfasst eine Suspensionskammer mit einem produkteintragseitigen Ende und einem produktaustragseitigen Ende. In einem Bereich des produkteintragseitigen Endes ist ein Öffnung für den Produkteintrag einer Suspension vorgesehen. An dem produktaustragseitigen Ende ist ein Produktraum angeordnet, in dem der Produktkuchen aus der Suspension gebildet wird. Des weiteren ist ein an den Produktraum angrenzendes und mit diesem über ein Filterelement in Wirkverbindung stehender, vakuumbeaufschlagbarer Filtratraum vorgesehen. Der Filtratraum weist einen im wesentlichen runden Querschnitt auf, und eine Schussdüse zum Einschießen von Prozessgas ragt in den Filtratraum.

Die Anordnung der mindestens einen Schussdüse ist derart, dass diese durch eine entsprechende Öffnung in einer Seitenwandung des Filtratraums ragt. Die Positionierung der Schussdüse sowie die Anzahl der Schussdüsen wählt der Fachmann in Abhängigkeit von dem Filtratraumdurchmesser. Die mindestens eine Schussdüse kann bspw. im wesentlichen parallel zur Ebene des Filterelements, das zwischen dem Filtratraum und dem Produktraum angeordnet ist, verlaufen. Des weiteren kann die Schussdüse so angeordnet sein, dass sie tangential in den Filtratraum ragt. Außerdem ist es möglich, mehr als eine Schussdüse vorzusehen, die parallel zueinander an unterschiedlichen Radien, d.h. über den Radius des Filtratraums verteilt, angeordnet sein können.

Mit dem erfindungsgemäßen stationären Filtertrockner ist es möglich, den im Produktraum durch Separation der in der eingebrachten Suspension enthaltenen Fest- und Flüssigstoffe gebildeten Produktkuchen während seiner Verfestigung durch Einschießen von Prozessgas aufzulockern. Das Einschießen kann bspw. pulsartig und/oder getaktet erfolgen. Durch die erfindungsgemäße Anordnung der Schussdüse wird in dem Filtratgehäuse zunächst ein spiralförmiger Gasfluss erzeugt. Dadurch erfolgt ein Druckaufbau des Prozessgases in dem Innern des Filtratgehäuses, der dann durch das Filtergewebe in den Produktraum entweicht und dort den Filterkuchen bzw. Produktkuchen durchdringt.

Dieses Durchdringen oder Durchschießen des Kuchens mit Prozessgas hat zunächst ein mechanisches Auflockern des den Kuchen bildenden Materials zur Folge, das den gleichmäßigen homogenen Trocknungsprozess begünstigt. Darüber hinaus erfolgt ein Energieeintrag bzw. Wärmeeintrag über das Prozessgas in den Kuchen, der zur weiteren Trocknung beiträgt. Das Prozessgas kann bspw. erwärmt sein bzw. eine gegenüber der Temperatur des Produktkuchens oder gegenüber der im Produktraum herrschenden Temperatur höhere Temperatur aufweisen.

Der spiralförmige Gasfluss des eingeschossenen Prozessgases kann durch mindestens ein dafür vorgesehenes Leitelement unterstützt werden, das in dem Filtratraum ausgebildet ist. Insbesondere bei größerflächigen Filtraträumen unterstützt dies den Aufbau des notwendigen Drucks.

Als Leitelement kann bspw. einer oder mehrere entsprechend ausgebildete Führungskanäle dienen. Ein Führungskanal kann bspw. durch eine spiralförmig verlaufende Wand aus Blech oder einem anderen geeigneten Material gebildet sein. Der Führungskanal kann sich über die gesamte Höhe des Filtratraums oder nur einen Teil davon erstrecken. Der Wandverlauf kann unterbrochen sein und/oder mit Öffnungen versehen sein, durch die weitere Schussdüsen ragen können. So kann ein gelenkter, vorgegebener Gasfluss in dem Filtratraum des durch eine oder mehrere Schussdüsen eingeschossenen Prozessgases erzeugt werden.

Alternativ ist es möglich, bei zwei oder mehreren Schussdüsen eine entsprechende Anzahl von Ringen (aus Metall oder einem anderen geeigneten Material) als Leitelemente in den Filtratraum einzusetzen, um zu jeder Schussdüse sozusagen eine zugeordnete Druckaufbaukammer zu schaffen. Diese Druckaufbaukammern sind dann im wesentlichen konzentrisch zueinander.

Der Trocknungsprozess kann in an sich bekannter Weise durch eine Vakuumbeaufschlagung erfolgen. Die Vakuumbeaufschlagung kann während des Einschießens von Prozessgas durch die Schussdüse ausgesetzt werden, d.h. das Einschießen von Prozessgas kann alternierend getaktet mit der Vakuumbeaufschlagung erfolgen.

Zusätzlich oder alternativ ist es möglich, den Trocknungsprozess durch Rühren des Produktkuchens zu unterstützen. Der Rührer kann beheizt sein, um einem Unterkühlen oder gar Gefrieren der in der Suspension enthaltenen Flüssigkeit(en) wie bspw. Wasser während der Vakuumbeaufschlagung entgegenzuwirken.

Darüber hinaus kann zusätzlich oder alternativ die Mantelfläche des Produktraums beheizt sein.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt einen erfindungsgemäßen Filtertrockner in seitliche Querschnittsansicht mit ausgefahrenem Obergehäuse.
- Figur 2: zeigt den Filtertrockner der Figur 1 mit einge- fahrenem Obergehäuse.
- Figur 3: zeigt eine stark vergrößerte Detaildarstellung des Produktraums und des Filtratgehäuses des Fil- tertrockners der Figur 1 in perspektivischer Sei- tenaufrissdarstellung.

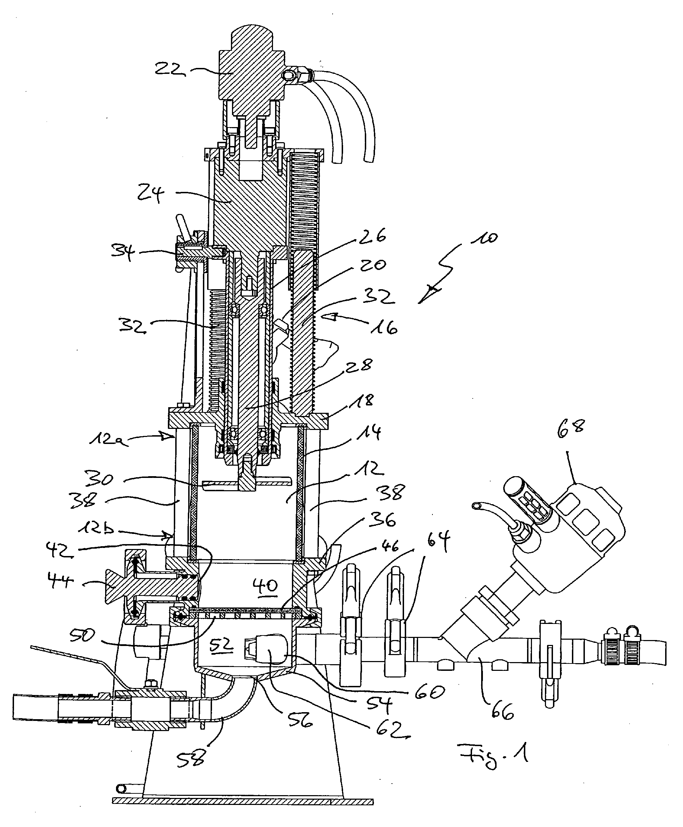

Figur 1 zeigt einen erfindungsgemäßen Filtertrockner 10 zum Entfeuchten und Trocknen von Feststoff-Flüssigkeitsgemischen. Bei dem dargestellten Filtertrockner 10 handelt es sich um ein insbesondere im Laborbereich Verwendung findendes Gerät.

Der Filtertrockner 10 umfasst eine Suspensionskammer 12 zur Aufnahme der zu entfeuchtenden Suspension. Die Suspensionskammer 12 ist durch eine - im dargestellten Ausführungsbeispiel zylinderförmige - Wandung 14 begrenzt. Die Wandung 14 kann bspw. aus einem durchsichtigen Material bestehen, damit Füllstand und Prozessablauf ggf. optisch verfolgt werden können. Als Material bietet sich hierfür bspw. Borosilikatglas an, aber auch andere geeignete Materialien sind möglich. Das Kammervolumen hängt von dem Einsatzbereich ab; bei dem dargestellten Laborgerät kann das Kammervolumen bspw. 0,5 l betragen. Abhängig vom Anwendungsbereich sind jedoch grundsätzlich auch deutlich größere Anwendungen mit Durchmessern von bis zu mehreren Metern möglich.

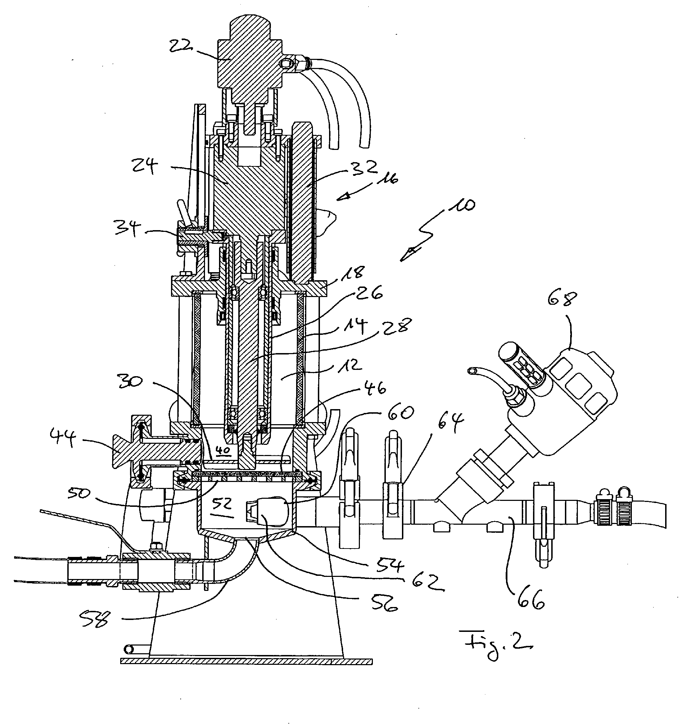

Oberhalb der Suspensionskammer 12 ist ein Obergehäuse 16 vorgesehen, das u.a. die Suspensionskammer 12 mittels eines Deckels 18 nach oben verschließt. Des weiteren ist an dem Deckel 18 des Obergehäuses 16 und somit an einem produkteintragseitigen Ende 12a der Suspensionskammer 12 eine (nicht sichtbare) Öffnung für den Produkteintrag der zu verarbeitenden Suspension vorgesehen. In der Darstellung der Figuren 1 und 2 ist lediglich ein Teil eines Flansches 20, der mit der Produkteintragsöffnung verbunden ist, zu sehen. Weitere Öffnungen in dem Deckel 18 sind möglich, bspw. für eine Zufuhr von Gas für eine Überdruckfiltration und/oder eine Entlüftung.

Das Obergehäuse 16 umfasst einen dreibeinigen Federhalter-/Federführungsaufbau, der eine Rühreranordnung zum Rühren der Suspension in der Suspensionskammer 12 trägt, die entlang der Suspensionskammer 12 verfahrbar ist. Figur 1 zeigt die Rühreranordnung in einer ausgefahrenen Stellung, Figur 2 zeigt die Rühreranordnung in der vollständig eingefahrenen Anordnung.

Die Rühreranordnung umfasst einen Antriebsmotor 22 (bspw. einen Druckluftmotor), ein Getriebe 24 sowie eine durch eine Lagerhülse 26 geführte Lagerwelle 28. An einem motorfernen Ende der Lagerwelle ist eine Rührerschaufel bzw. ein Rührerpaddel 30 angeordnet. Die Höhenverstellung erfolgt mittels Federführungsstangen 32 in an sich bekannter Art und Weise. Aus Gründen der Betriebssicherheit kann eine Höhen- und Verdrehsicherung 34 vorgesehen sein.

An einem produktaustragseitigen Ende 12b der Suspensionskammer 12 ist die Wandung 14 der Suspensionskammer 12 in einer Filtergehäusebasis 36 verankert. Zur Erhöhung der Stabilität sind mehrere Abstandsstangen 38 parallel zueinander um das Suspensionskammergehäuse zwischen der Filtergehäusebasis 36 und dem als Gehäuseflansch ausgebildeten Deckel 18 vorgesehen.

An ihrem produktaustragseitigen Ende 12b ist die Suspensionskammer 12 als Produktraum 40 ausgebildet. In dem dargestellten Ausführungsbeispiel ist der Produktraum 40 im Inneren der Filtergehäusebasis 36 ausgebildet, ohne speziellen Übergang zur Suspensionskammer 12 (lediglich eine baulich bedingte Verjüngung ist zu verzeichnen). Andere Ausgestaltungen mit baulich separatem oder vollständig in die Suspensionskammer integriertem Produktraum sind selbstverständlich möglich.

Der Produktraum 40 verfügt über eine mittels eines Stopfens 44 öffen- und verschließbare Öffnung 42 für den Produktaustrag bzw. die Probenentnahme.

An einer der Suspensionskammer 12 abgewandten Seite des Produktraums 40 ist ein Filterelement 46 vorgesehen, das auf einem mit einer Mehrzahl von Löchern 48 versehenen Lochblech 50 aufliegt. Bei dem Filterelement 46 kann es sich um jedes geeignete Filtermaterial bzw. Filtergewebe handeln, wie es dem Fachmann bekannt ist. Beispielsweise kann es sich um ein metallisches Filtergewebe handeln, aber auch andere Materialien wie Verbundwerkstoffe, Filtervliese u.dgl. sind einsetzbar.

Das Lochblech 50 und das Filterelement 46 trennen den Produktraum 40 von dem sich auf der anderen Seite anschließenden Filtratraum 52, der von einem Filtratgehäuse 50 umgeben und begrenzt ist. Das Filtratgehäuse 50 verfügt über eine Öffnung 56, an die eine Leitung 58 angeschlossen ist. Die Öffnung 56 dient zum Filtrataustritt einerseits und zur Vakuumbeaufschlagung andererseits.

Des weiteren verfügt das Filtratgehäuse 54 über eine Einschussöffnung 60, die in einer Seitenwand des im wesentlichen zylinderförmig ausgebildeten Filtratgehäuses 54 vorgesehen ist. Durch die Einschussöffnung 60 ragt eine Schussdüse 62 zum Einschießen von Prozessgas in den Filtratraum 52, wobei die Einschussöffnung 60 derart ausgebildet ist, dass die Schussdüse 62 (außermittig) tangential in den Filtratraum 52 ragt. Unter dem Begriff "Prozessgas" ist grundsätzlich ein solches Gas zu verstehen, das in dem Produkt keinerlei chemische Reaktionen hervorruft und das Produkt nicht in einer sonstigen Weise schädigt. Die Auswahl eines geeigneten Prozessgases liegt im Bereich des fachmännischen Könnens.

Die Schussdüse 62 ist mittels Flanschen 64 mit einer Leitung 66 zum Zuführen von Prozessgas verbunden. Die Leitung 66 verfügt bspw. über ein in den Figuren 1 und 2 dargestelltes Schrägsitzventil 68.

Der beschriebene und in den Figuren dargestellte Filtertrockner steht im wesentlichen aufrecht, d.h. die Suspensionskammer ist mit ihrer Längsachse im wesentlichen vertikal ausgerichtet. Der Produktraum und der Filtratraum schließen sich nacheinander unterhalb der Suspensionskammer an. Der Vorteil dieser Anordnung besteht darin, dass eine Trennung der Fest- und Flüssigstoffe der Suspension und der Austrag des Filtrats durch die Schwerkrafteinwirkung gefördert erfolgen. Selbstverständlich sind auch andere Anordnungen möglich, die der Fachmann ohne weiteres erkennen kann.

Des weiteren ist der Filtertrockner des Ausführungsbeispieles schwenkbar angeordnet (nicht näher dargestellt), und zwar derart, dass der Filtertrockner um eine im wesentlichen horizontale Achse, die senkrecht zur Zeichenebene der Figuren 1 und 2 verläuft, geneigt werden kann, um in dem Produktraum ein Gefälle hin zu der Öffnung 42 für den Produktaustrag zu erzeugen.

Im Betrieb wird bei dem Filtertrockner der Erfindung Suspension durch die dazu vorgesehene Öffnung in dem Deckel 18 der Supensionskammer 12 zugeleitet. Diese sinkt auf den Grund der Suspensionskammer 12 und des Produktraums 40 ab, wobei unterstützt durch eine Vakuumbeaufschlagung über die Leitung 58 in der Suspension enthaltene Flüssigstoffe durch das Filterelement 46 abgesogen werden und Feststoffe in dem Produktraum 40 zurückgehalten werden. Die Suspension wird durch die sich drehende Rührerschaufel 30 umgewälzt, so dass eine möglichst homogene Trennung der Fest- und Flüssigstoffe gefördert wird. Die Rührerschaufel und/oder die Wandungen von Suspensionskammer und/oder Produktraum können wie bereits voranstehend beschrieben beheizt sein, damit ein Unterkühlen oder gar Gefrieren der Suspension durch die Vakuumbeaufschlagung verhindert wird.

Um den Grad der Homogenität der Entfeuchtung und somit die Güte des filtrierten Produkts weiter zu steigern, wird gemäß der Erfindung Prozessgas in den Produktraum eingeschossen, um den Produktkuchen aufzulockern, eine Verklumpung zu vermeiden und noch feuchte Stellen des Kuchens aufzulösen und so einer besseren Trocknung zugänglich zu machen. Das Einschießen des Prozessgases erfolgt dabei nach der erfindungsgemäßen Lehre in den benachbart zu dem Produktraum gelegenen Filtratraum, so dass sich in diesem ein Überdruck aufbauen kann, der sich dann durch das Filterelement hindurch in den Produktraum entlädt.

Das Einschießen des Prozessgases erfolgt tangential in den Filtratraum. Dieses Vorgehen hat zur Folge, dass sich das (parallel zum Produktraum) eingeschossene Prozessgas in dem einen im wesentlichen runden Querschnitt (Grundriss) aufweisenden Filtratraum spiralförmig nach innen zur Mitte des Filtratraums hin konzentriert und einen Druck aufbaut. Dieser entlädt sich dann durch das Lochblech und das darüber angeordnete Filterelement (da die anderen Öffnungen, insbesondere die Vakuumzuleitung 58, geschlossen sind, die einzige Möglichkeit für die Druckentweichung) in den (im Ausführungsbeispiel darüber liegenden) Produktraum. Dort durchdringt der Prozessgaspuls den Kuchen, lockert diesen auf und bewirkt einen Energieeintrag in den Kuchen.

Die beschriebene "Verwirbelung" des eingeschossenen Prozessgases in dem Filtratraum sorgt für einen flächigen Durchtritt des Prozessgases in den Produktraum, so dass der Produktkuchen breitflächig beaufschlagt und durchdrungen wird. Bei einem direkten Einschießen von Gas in den Kuchen wäre im Gegensatz zu diesem erfindungsgemäßen Effekt nur ein kleinflächiges und somit unzureichendes Durchdringen die Folge.

Die Erfindung umfasst auch eine Steuereinrichtung, die beim Einschießen eines Prozessgaspulses durch die Leitung 66 die Vakuumbeaufschlagung durch die Vakuumleitung 58 unterbricht, d.h. die Vakuumleitung 58 schließt und erst nach erfolgtem Prozessgaseinschuss wieder öffnet.

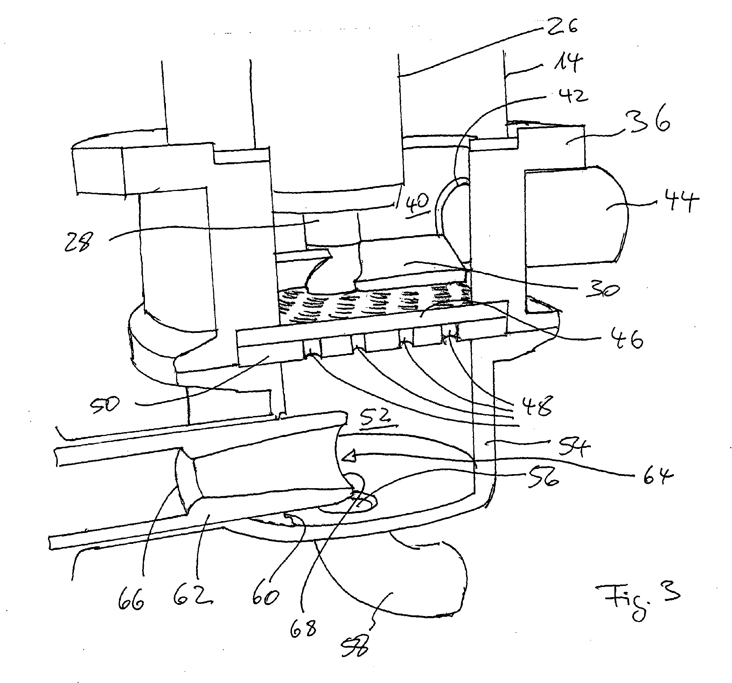

Die Form der Mündung 64 der Schussdüse 62 ist aus der vergrößerten Darstellung der Figur 3 ersichtlich. Die Mündung 64 der Schussdüse 62 weist im Innern der Schussdüse eine durch einen Kragen 66 gebildete Verjüngung auf, wodurch eine Beschleunigung des Prozessgases erzielt wird. Die Verjüngung weitet sich zum Ende der Düse und deren Austrittsöffnung 68 hin konisch auf, wodurch ein divergierender Austritt des beschleunigten Gases erfolgt. Dies gewährleistet eine effiziente Ausbreitung des Gaspulses in dem Filtratraum 52 und einen entsprechend guten Druckaufbau aufgrund des durch die im wesentlichen zylindrische Wandung in "Drehung" versetzten Gases. Diese "Verwirbelung" sorgt für einen flächigen Durchtritt des Prozessgases in den Produktraum 40, so dass der Produktkuchen breitflächig beaufschlagt und durchdrungen wird. Bei einem direkten Einschießen von Gas in den Kuchen wäre im Gegensatz zu diesem erfindungsgemäßen Effekt nur ein kleinflächiges und somit unzureichendes Durchdringen die Folge.

Die Entnahme von Produkt aus dem Produktraum 40 nach erfolgter Trocknung erfolgt über die Produktaustragöffnung 42. Zur erleichterten Entnahme von Produkt kann der Filtertrockner hierzu - wie bereits voranstehend ausgeführt - um eine vertikale Schwenkachse in eine geeignete Neigestellung gebracht werden.

## Patentansprüche

1. Filtertrockner (10), mit
einer Suspensionskammer (12), die ein produkteintragseitiges Ende (12a) und ein produktaustragseitiges Ende (12b) aufweist, wobei im Bereich des produkteintragseitigen Endes (12a) eine Öffnung für den Produkteintrag einer Suspension vorgesehen ist,
einem an dem produktaustragseitigen Ende (12b) ausgebildeten Produktraum (40), in dem der Produktkuchen aus der Suspension gebildet wird, und
einem an den Produktraum (40) angrenzenden und mit diesem über ein Filterelement (46) in Wirkverbindung stehenden Filtratraum (52), der vakuumbeaufschlagbar ist,
wobei der Filtratraum (52) einen im wesentlichen runden Querschnitt aufweist und mindestens eine in den Filtratraum (52) ragende Schussdüse (62) vorgesehen ist.

2. Filtertrockner (10) nach Anspruch 1, bei dem die mindestens eine Schussdüse (62) seitlich durch eine Wandung des Filtratraums (52) ragt.

3. Filtertrockner (10) nach Anspruch 1 oder 2, bei dem die mindestens eine Schussdüse (62) tratraum (52) ragt.

4. Filtertrockner (10) nach einem der Ansprüche 1 bis 3, bei dem die mindestens eine Schussdüse (62) für eine Einschießen von Prozessgas in einer Richtung im wesentlichen parallel zu dem Filterelement (46) angeordnet ist.

5. Filtertrockner (10) nach einem der Ansprüche 1 bis 4, bei dem in dem Filtratraum (52) mindestens ein Leitelement für das eingeschossene Prozessgas vorgesehen ist.

6. Filtertrockner (10) nach einem der Ansprüche 1 bis 5, bei dem das Filterelement (46) auf einem Lochblech (50) aufliegt.

7. Filtertrockner (10) nach einem der Ansprüche 1 bis 6, bei dem das Einschießen von Prozessgas in Pulsen erfolgt.

8. Filtertrockner (10) nach einem der Ansprüche 1 bis 7, bei dem während eines Einschießens von Prozessgas die Vakuumbeaufschlagung des Filtratraums (52) ausgesetzt ist.

9. Filtertrockner (10) nach einem der Ansprüche 1 bis 8, bei dem eine Rühreinrichtung mit einer Rührschaufel (30) zum Rühren der Suspension in der Suspensionskammer (12) und/oder dem Produktraum (40) vorgesehen ist.

10. Filtertrockner (10) nach Anspruch 9, bei dem die Rührschaufel (30) entlang der Suspensionskammer (12) und/oder dem Produktraum (40) verfahrbar ist.

11. Filtertrockner (10) nach Anspruch 9 oder 10, bei dem die Rührschaufel (30) beheizbar ist.

12. Filtertrockner (10) nach einem der Ansprüche 1 bis 11, bei dem eine Wandung (14) der Suspensionskammer (12) und/oder des Produktraums (40) beheizbar ist.

13. Verfahren zum Betrieb eines Filtertrockners (10), der eine Suspensionskammer (12) sowie einen an einem produktaustragseitigen Ende (12b)der Suspensionskammer (12) ausgebildeten Produktraum (40) umfasst, wobei in dem Produktraum (40) zur Bildung eines Produktkuchens aus der Suspension in dieser enthaltene Feuchtigkeit entzogen wird und zur Lockerung des Produktkuchens Prozessgas in einen an den Produktraum angrenzenden Filtratraum (52) mit im wesentlichen rundem Querschnitt eingeschossen wird, um in dem Filtratraum (52) einen Prozessgaspuls zu erzeugen, der in den Produktraum (40) entweicht und den Produktkuchen durchdringt.

14. Verfahren nach Anspruch 13, bei dem das Prozessgas eine höhere Temperatur als der Produktkuchen aufweist.

15. Verfahren nach Anspruch 13 oder 14, bei dem die Entfeuchtung der Suspension mittels Vakuumbeaufschlagung erfolgt und die Vakuumbeaufschlagung während des Einschießens von Prozessgas ausgesetzt wird.
